# EUROPEAN PATENT APPLICATION

(11) **EP 2 541 123 A1**
(43) Date of publication of application: **02.01.2013**
(21) Application number: 11747439.5
(22) Date of filing: 24.02.2011
(51) Int. Cl.: F21S 2/00, G02F 1/1333, G02F 1/13357

(54) **LIGHT GUIDING APPARATUS, LIGHT SOURCE APPARATUS, DISPLAY APPARATUS, AND TELEVISION RECEIVER APPARATUS**

(30) Priority: 07.01.2011 JP 2011002455; 26.02.2010 JP 2010043057
(71) Applicant: Sharp Kabushiki Kaisha, Osaka-shi, Osaka 545-8522 (JP)
(72) Inventor: NAKAMURA, Shinichi, Osaka-shi, Osaka 545-8522 (JP); KIKUCHI, Takaharu, Osaka-shi, Osaka 545-8522 (JP); TAKEUCHI, Hideto, Osaka-shi, Osaka 545-8522 (JP); IWATA, Eiji, Osaka-shi, Osaka 545-8522 (JP)
(74) Representative: Müller - Hoffmann & Partner
(86) International application number: PCT/JP2011/054120
(87) International publication number: WO 2011/105479

(57) **Abstract**

Provided are: a light guide plate apparatus including a plurality of light guide plates arranged in parallel in which the middle part in the longitudinal direction of the light guide plates is held by a support body without blocking light diffusion in the inside of each light guide plate; a light source apparatus employing this light guide plate apparatus; a display apparatus in which the luminance distribution is homogenized in the center part of the screen; and a television receiver apparatus employing this display apparatus.

A plurality of light guide plates 42 having an approximately rectangular shape and emitting light having entered through the side surface on one shorter side are supported by a support body 41, in plural lines such that the side surfaces on the longer side are facing each other. Then, between adjacent ones of the light guide plates 42, holding bodies 22 and 23 engaging with the side-face part on the longer side in the center part in the longitudinal direction of the adjacent light guide plates 42 so as to hold the light guide plates 42 are provided so that warpage is avoided in the center part in the longitudinal direction of the light guide plate 42 and diffusion of light is homogenized in the inside of the light guide plate 42.

## Description

### [Technical Field]

The present invention relates to: a light guide plate apparatus including light guide plates emitting, through one surface, light having entered through a side surface; a light source apparatus employing this light guide plate apparatus; a display apparatus employing this light source apparatus; and a television receiver apparatus employing this display apparatus.

### [Background Art]

A liquid crystal display apparatus of so-called flat type such as a liquid crystal television includes: a display section that has a display screen arranged on the front side and displaying a video image and that has the shape of an approximately rectangular parallelepiped; and a light source section arranged behind the display section and projecting light to the display section. Then, a diffusion plate and an optical sheet such as a prism sheet are arranged between the light source section and the display section.

The display section includes a liquid crystal display panel having the shape of an approximately rectangular parallelepiped. The liquid crystal display panel itself does not emit light and hence requires a light source for displaying a video image onto the display screen. Thus, a backlight apparatus is employed as the light source.

Generally adopted backlight apparatuses are divided into: an edge light type in which a light guide plate is arranged behind the display section and a light source is arranged on the side-surface side of the light guide plate; and an immediately-under light type in which a diffusion plate is arranged behind the display section and a light source is arranged behind the diffusion plate.

In the backlight apparatus of edge light type, light having entered through the side surface of the light guide plate is diffused in the inside of the light guide plate and then emitted from one surface of the light guide plate. Thus, the front-back thickness of the display apparatus is reduced in comparison with the immediately-under light type in which a light source is arranged behind a diffusion plate. Accordingly, the edge light type has an advantage in achieving thickness reduction.

Backlight apparatuses of edge light type are divided into: a single light guide plate type in which a light guide plate having a size corresponding to the liquid crystal display panel is employed; and a light guide plate group type in which a plurality of light guide plates having a strip shape are arranged in parallel to each other (for example, see Patent Document 1).

The backlight apparatus described in Patent Document 1 includes: a light guide plate group in which a plurality of light guide plates having the light-entering side-surfaces at two ends and having a strip shape are arranged in parallel to each other; a support body supporting the light guide plate group; and circuit boards on which a plurality of light emitting elements are mounted in one line and which are arranged at positions facing the two ends of the light guide plate. Then, light having emitted from the light emitting element of each circuit board enters through the light-entering side-surface at each end of each light guide plate and then exits through one surface.

### [Prior Technical Document]

### [Patent Document]

[Patent Document 1] Japanese Patent Application Laid-Open No. 2008-300170

### [Summary of the Invention]

### [Problems to be Solved by the Invention]

Meanwhile, in a backlight apparatus of light guide plate group type like that described in Patent Document 1, an optical design may be shared with a backlight apparatus employing a plurality of cold cathode fluorescent lamps (CCFLs) arranged in parallel to each other. This simplifies optical design work. Further, ON-OFF timing may be controlled independently for each of the light guide plates arranged in parallel to each other. This improves a video performance. Thus, the backlight apparatus of light guide plate group type is advantageous over the backlight apparatus of single light guide plate type.

Further, in the backlight apparatus of single light guide plate type, the four corner parts of the light guide plate may be held by a support body. Thus, even in a case that the apparatus is adopted in a large-size display apparatus such as a liquid crystal television whose size is continuously increased recently, the center side of the light guide plate hardly warps in the thickness direction even when the center side of the light guide plate is not held by a support body.

In contrast, in the backlight apparatus of light guide plate group type, the light guide plates become longer with increasing size and hence warpage in the thickness direction easily occurs in the light guide plates. Thus, when the apparatus is adopted in a large-size display apparatus, the two ends in the longitudinal direction of the light guide plates arranged in parallel to each other need be held by a support body and further the center side of the light guide plates need be held by a support body.

For the purpose of holding of the center side of the light guide plates by using a support body, a deformed part, a removed part, a hole, or the like for holding may be provided in the center part of the light guide plate. Then, holding may be achieved by a male screw engaging with the deformed part or the removed part. Alternatively, holding may be achieved by a male screw inserted into the hole.

Nevertheless, when a deformed part, a removed part, a hole, or the like is present on the center side of the light guide plate that diffuses, in the inside of the entire light guide plate, light having entered through the side surface and then emits the diffused light from one surface, the light diffusion in the inside of the light guide plate becomes inhomogeneous. Thus, in a large-size liquid crystal television employing a backlight apparatus of light guide plate group type, luminance distribution becomes inhomogeneous in the screen center part which is watched most carefully by the viewer so that luminance inhomogeneity occurs easily.

The present invention has been devised in view of this situation. A major object of the present invention is to provide: a light guide plate apparatus provided with a plurality of light guide plates arranged in parallel to each other in which the middle part in the longitudinal direction of the light guide plates is held by a support body without blocking light diffusion in the inside of the light guide plate; a light source apparatus employing this light guide plate apparatus; a display apparatus in which the luminance distribution in the center part of a screen is homogenized; and a television receiver apparatus employing this display apparatus.

### [Means for Solving Problems]

The light guide plate apparatus according to the present invention is a light guide plate apparatus including a plurality of light guide plates having an approximately rectangular shape and emitting from one surface light having entered through a side surface on one shorter side, the plurality of light guide plates being arranged in parallel to each other such that side surfaces on a longer side are facing a support body supporting the light guide plates, wherein the apparatus includes a holding body arranged between adjacent ones of the light guide plates and engaging with a side-face part at least on one longer side of the adjacent light guide plates so as to hold the light guide plates.

According to this invention, the holding body arranged between adjacent light guide plates engages with one side-face part of the adjacent light guide plates. Thus, without the necessity of providing a deformed part, a removed part, a hole, or the like in the middle part in the longitudinal direction of the light guide plate, the middle part in the longitudinal direction of the light guide plate is allowed to be held by a support body. Accordingly, light diffusion in the inside of the light guide plate is homogenized. Further, the holding body arranged between adjacent light guide plates engages with the side-face part of the two adjacent light guide plates. Thus, without the necessity of providing a deformed part, a removed part, a hole, or the like in the middle part in the longitudinal direction of the light guide plate, the middle part in the longitudinal direction of the light guide plate is allowed to be held by the support body. Further, two adjacent light guide plates are held by one holding body. Thus, the number of holding bodies necessary for the light guide plates is reduced. This suppresses the influence of light inhomogeneity caused by the holding body, and hence improves the light characteristics of the light guide plate.

The light guide plate apparatus according to the present invention preferably has a configuration that the longer side of the one surface in the light guide plate has an engagement recess depressed from the side surface on the longer side and extending over the entire length, and that the holding body engages with the engagement recess.
According to this invention, light having entered through the side surface on the shorter side is allowed to be emitted from the non-engagement recess and the engagement recess on one surface. Then, the emission direction of the light emitted from the engagement recess on one surface is allowed to be different from the emission direction of the light emitted from the non-engagement recess, thereby reducing light inhomogeneity between adjacent light guide plates. Further, the holding body is allowed to be arranged within the thickness of the light guide plates. This permits thickness reduction of the light guide plate apparatus without the influence of the holding body.

The light guide plate apparatus according to the present invention preferably has a configuration that the holding body has light reflectivity.
According to this invention, when the light emitted from the light guide plate hits the holding body, the light is reflected by the holding body. This suppresses further the influence of light inhomogeneity caused by the holding body, and hence improves further the light characteristics of the light guide plate.

The light guide plate apparatus according to the present invention preferably has a configuration that the holding body has one end fixed to the support body or a middle member arranged between the support body and the light guide plate, and includes a base piece arranged between the adjacent light guide plates and two claw pieces extending from the other end part of the base piece toward the adjacent light guide plate side.
According to this invention, two claw pieces are provided in the base piece arranged between adjacent light guide plates. Thus, holding of the light guide plates is allowed in a state that the claw piece or the base piece is warped. Accordingly, even in a case of relatively long light guide plates, the workability of arranging the light guide plates in parallel to each other is improved.

The light guide plate apparatus according to the present invention preferably has a configuration that the two claw pieces are warped convex over a range from a tip part of one claw piece to a tip part of the other claw piece.
According to this invention, light emitted from one surface of the light guide plate hardly hits the claw pieces of the holding body. Thus, the influence of light inhomogeneity caused by the holding body is suppressed further, and the light characteristics of the light guide plate are improved further.

The light guide plate apparatus according to the present invention preferably has a configuration that the two claw pieces are parallel to the one surface over a range from a tip part of one claw piece to a tip part of the other claw piece.
According to this invention, light emitted from one surface of the light guide plate hardly hits the claw pieces of the holding body. Thus, the influence of light inhomogeneity caused by the holding body is suppressed further, and the light characteristics of the light guide plate are improved further.

The light guide plate apparatus according to the present invention preferably has a configuration that the support body has a plate shape, a middle plate is provided whose one surface faces the support body and whose the other surface faces the light guide plate, and the plurality of holding bodies are provided in the other surface of the middle plate.
According to this invention, the middle plate is placed on the support body having a plate shape and then the light guide plates are placed on the middle plate. Thus, plural places of the light guide plates are held by the holding bodies. Accordingly, even in a case of employing relatively large number of light guide plates arranged in parallel to each other, the workability of arranging the light guide plates in parallel to each other is improved.

The light guide plate apparatus according to the present invention preferably has a configuration that the support body is provided with a first hole formed through and is provided with a first protruding piece protruding toward the middle plate side such as to hang over the first hole from the edge of the first hole, and that the middle plate is provided with a second hole which is formed through and into which the first protruding piece is inserted and the middle plate is provided with a second protruding piece protruding toward the support body side such as to hang over the second hole from the edge of the second hole and facing in contact with the first protruding piece in the thickness direction of the middle plate.
According to this invention, the middle plate is placed on the support body having a plate shape and then the second protruding piece of the middle plate is inserted into the first hole. Thus, the second protruding piece faces in contact with the first protruding piece so as to restrict the movement of the middle plate in the thickness direction and the sliding thereof in the direction along the surface. This permits easy attachment of the middle plate at an appropriate position of the support body, and hence improves further the workability of arranging the light guide plates in parallel to each other.

The light guide plate apparatus according to the present invention preferably has a configuration that the first protruding piece is arranged such that a surface opposite to a facing contact surface facing in contact with the second protruding piece is located at a position of approximately aligning with the other surface of the middle plate.
According to this invention, the level difference is reduced between the other surface of the middle plate and the middle plate side-surface of the first protruding piece. Thus, in a case that a relatively wide light reflecting plate is inserted between the middle plate and the light guide plate in order to improve reflectivity for the light emitted from the light guide plate, warpage is avoided in the thickness direction of the light reflecting plate. This suppresses the influence of light inhomogeneity caused by the first protruding piece, and hence improves further the light characteristics of the light guide plate.

The light guide plate apparatus according to the present invention preferably has a configuration that the second protruding piece is arranged such that a surface opposite to a facing contact surface facing in contact with the first protruding piece is located at a position of approximately aligning with a surface opposite to the middle plate of the support body.
According to this invention, the level difference is reduced between the side face opposite to the middle plate of the holding body having a plate shape and the side face opposite to the first protruding piece of the second protruding piece is reduced. Thus, an increase in the thickness is avoided that could be caused by attaching the middle plate to the support body, and hence overall thickness reduction is achieved.

The light guide plate apparatus according to the present invention preferably has a configuration that a light reflecting plate is arranged between the middle plate and the light guide plate and having an insertion hole into which the holding body is inserted.
According to this invention, in a case that a light reflecting plate is inserted between the middle plate and the light guide plate in order to improve reflectivity for the light emitted from the light guide plate, the holding body falls out from the insertion hole when the light reflecting plate is placed on the middle plate. In contrast, when the light guide plate is placed on the light reflecting plate, the light guide plate is held by the holding body. This permits easy assembling of the light guide plates without disturbance by the light reflecting plate, and hence improves further the workability of arranging the light guide plates in parallel to each other.

The light guide plate apparatus according to the present invention preferably has a configuration that one of the two shorter sides of the light guide plate is fixed to the support body and that a positioning part is provided that defines the position of the light guide plate in a manner that the other one of the two shorter sides of the light guide plate is allowed to expand or contract in the length direction of the longer side.
According to this invention, one end side in the longitudinal direction of the light guide plate is fixed to the support body and the other end side thereof is positioned by the positioning part in a manner permitting expansion and contraction. Thus, when the light guide plate expands or contracts in the longitudinal direction owing to heat, the expansion or contraction in the light guide plate is absorbed by the positioning part and hence warpage is avoided in the light guide plate.

The light guide plate apparatus according to the present invention preferably has a configuration that the positioning part has two protrusions arranged such as to be allowed to engage with the two side surfaces on the longer side of the light guide plate.
According to this invention, the expansion and contraction of the light guide plate that expands or contracts in the longitudinal direction owing to heat is guided by the two protrusions. This permits holding of the light guide plate at an appropriate position without the influence of expansion and contraction.

The light guide plate apparatus according to the present invention preferably has a configuration that the positioning part has: an elongated hole formed through the light guide plate in the thickness direction and elongated in the length direction of the longer side; and a protrusion fitted into the elongated hole in a manner permitting relative displacement.
According to this invention, the protrusion is fitted into the elongated hole formed through the light guide plate in the thickness direction. Thus, the dimension between the side surfaces of adjacent light guide plates is reduced without the influence of the positioning part. This alleviates the light inhomogeneity in the part between the side surfaces of adjacent light guide plates.

The light guide plate apparatus according to the present invention preferably has a configuration that a light reflecting plate is arranged between the light guide plate and the support body and that the holding body is formed integrally with the light reflecting plate.
According to this invention, the light reflecting plate is supported by the support body. This permits arrangement of the holding body at an appropriate position. This avoids an increase in the number of assembling steps that could be caused by employing the holding body.

The light guide plate apparatus according to the present invention preferably has a configuration that a locking claw is integrally provided in a surface facing the support body of the light reflecting plate and that a locking hole into which the locking claw is inserted and locked is provided in the support body.
According to this invention, the light reflecting plate is placed on the support body and the locking claw is inserted into the locking hole so that the light reflecting plate is held at an appropriate position. This avoids position deviation of the light guide plate relative to the support body.

The light guide plate apparatus according to the present invention preferably has a configuration that the locking hole is an elongated hole allowing the locking claw to move in a direction along the light reflecting plate and that a stop part is provided that stops the light reflecting plate at a position to which the locking claw has moved.
According to this invention, in a state that the light reflecting plate is placed on the support body and that the locking claw is inserted into the locking hole, the light reflecting plate is slid in the longitudinal direction of the elongated hole. By virtue of this, the locking claw moves in the inside of the elongated hole and the locking claw is locked by the edge of the elongated hole so that the light reflecting plate is prevented from moving in the thickness direction. Further, the stop part prevents the light reflecting plate from sliding, so as to avoid position deviation of the light reflecting plate relative to the support body.

The light source apparatus according to the present invention is a light source apparatus comprising: light sources; and a light guide plate apparatus according to the above-mentioned invention, wherein the light guide plates are arranged such that light emitted from each light source enters through the side surface on the shorter side.
According to this invention, the light guide plates are arranged in parallel to each other, and the holding body is arranged between adjacent light guide plates. Further, the holding body engages with one side-face part of the adjacent light guide plates or the two side-face parts thereof. Thus, without the necessity of providing a deformed part, a removed part, a hole, or the like in the middle part in the longitudinal direction of the light guide plate, the middle part in the longitudinal direction of the light guide plate is allowed to be held by the support body. This permits homogenization of light diffusion in the inside of the light guide plate. Further, two adjacent light guide plates are held by one holding body. This reduces the number of holding bodies necessary for the light guide plate, and hence suppresses the influence of light inhomogeneity caused by the holding body so as to improve the light characteristics of the light guide plate.

The display apparatus according to the present invention is a display apparatus comprising: a display section having a display screen on one side; and a light source apparatus according the above-mentioned invention, which is arranged on the other side of the display section such that one surface of the light guide plate faces the one side.

According to this invention, warpage is avoided in the light guide plate arranged on the center side of a display section of a large-size display apparatus such as a liquid crystal television. Further, light diffusion is homogenized in the inside of the light guide plate, and hence luminance distribution is homogenized in the screen center part which is watched most carefully by the viewer so that the occurrence of luminance inhomogeneity is avoided in the light guide plates arranged in parallel to each other.

The television receiver apparatus according to the present invention is a television receiver apparatus comprising: a receiving section receiving a television broadcasting signal; and a display apparatus according to the above-mentioned invention, wherein the receiving section receives a television broadcasting signal and a television image is displayed on the display screen.
According to this invention, a television broadcasting signal is received and then a television image is displayed on the display screen.

### [Effects of the Invention]

According to the present invention, warpage can be avoided in a plurality of light guide plates arranged in parallel to each other and light diffusion can be homogenized in the inside of the light guide plate so that the light characteristics of the light guide plate is improved. Further, the luminance distribution can be homogenized in the center part of a display section of a large-size display apparatus such as a liquid crystal television, and hence the occurrence of luminance inhomogeneity is avoided in the plurality of light guide plates arranged in parallel to each other.

### [Brief Description of the Drawings]

FIG. 1 is an exploded perspective view illustrating a schematic configuration of a television receiver apparatus.
FIG. 2 is an exploded perspective view illustrating a schematic configuration of a liquid crystal display apparatus.
FIG. 3 is a front view illustrating a configuration of a display apparatus according to the present invention.
FIG. 4 is a horizontally sectional plan view of a display apparatus according to the present invention, a part of which is omitted.
FIG. 5 is a vertically sectional side-view of a display apparatus according to the present invention, a part of which is omitted.
FIG. 6 is a rear view illustrating a configuration of a rear face side of a translucent panel of a display apparatus according to the present invention.
FIG. 7 is a front view illustrating a configuration of a light guide plate part of a display apparatus according to the present invention.
FIG. 8 is a vertically sectional side-view illustrating a configuration of a light guide plate holding part of a display apparatus according to the present invention.
FIG. 9 is an expanded vertically sectional side-view illustrating a configuration of a light guide plate holding part of a display apparatus according to the present invention.
FIG. 10 is an expanded vertically sectional side-view illustrating a configuration of a light guide plate fixing part of a display apparatus according to the present invention.
FIG. 11 is an expanded vertically sectional side-view illustrating a configuration of a light guide plate positioning part of a display apparatus according to the present invention.
FIG. 12A is an expanded vertically sectional side-view illustrating another configuration of a first holding body part.
FIG. 12B is an expanded vertically sectional side-view illustrating another configuration of a first holding body part.
FIG. 12C is an expanded vertically sectional side-view illustrating another configuration of a first holding body part.
FIG. 13 is a front view illustrating another configuration of a light guide plate part.
FIG. 14 is a front view illustrating another configuration of a light guide plate part.
FIG. 15 is a front view illustrating another configuration of a light guide plate part.
FIG. 16 is a front view illustrating another configuration of a light guide plate part.
FIG. 17 is a vertically sectional plan view illustrating another configuration of a light guide plate part.
FIG. 18 is a vertically sectional side-view illustrating another configuration of a light guide plate apparatus according to the present invention.
FIG. 19 is an expanded sectional view illustrating a configuration of a main part of a light guide plate apparatus according to the present invention.
FIG. 20 is a perspective view illustrating a configuration of a middle plate of a light guide plate apparatus according to the present invention.
FIG. 21 is a front view illustrating a configuration of a middle plate of a light guide plate apparatus according to the present invention.
FIG. 22 is a side view illustrating a configuration of a middle plate of a light guide plate apparatus according to the present invention.

### [Mode for Carrying Out the Invention]

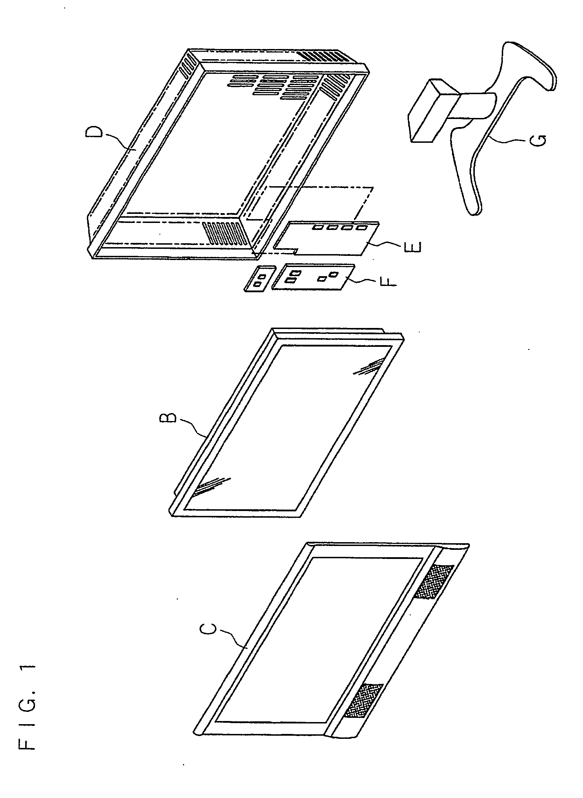

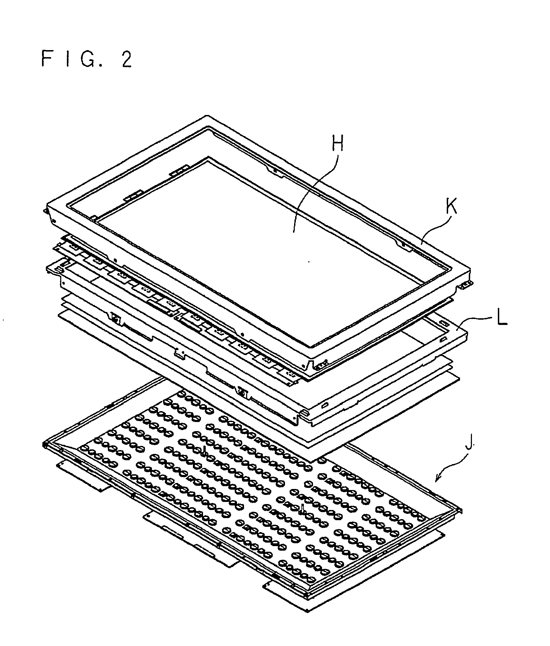

The present invention is described below in detail with reference to the drawings illustrating the embodiments. The following description is given for an example of a flat type display apparatus including a display section that has a display screen arranged on the front side and that has the shape of an approximately rectangular parallelepiped. The display apparatus includes a television receiver apparatus that has a liquid crystal display apparatus provided with a backlight section and that has a receiving section receiving a television broadcasting signal so that the receiving section receives the television broadcasting signal and then a television image is displayed on the display screen. FIG. 1 is an exploded perspective view illustrating a schematic configuration of a television receiver apparatus. FIG. 2 is an exploded perspective view illustrating a schematic configuration of a liquid crystal display apparatus.

The television receiver apparatus includes: a liquid crystal display apparatus B; a frame C and a cover D accommodating the liquid crystal display apparatus B in between; a power supply E; a tuner F; and a stand G. The liquid crystal display apparatus B has an overall shape of a horizontally long rectangle, and is accommodated in the frame C and the cover D in a stand-up orientation. As illustrated in FIG. 2, the liquid crystal display apparatus B includes a liquid crystal panel H serving as a display panel and a backlight section J serving as an external light source. Then, the liquid crystal panel H, the backlight section J, and the like are held integrally with holding frames K and L such as a frame-shaped bezel so that a panel module (a display section) is constructed.

### Embodiment 1

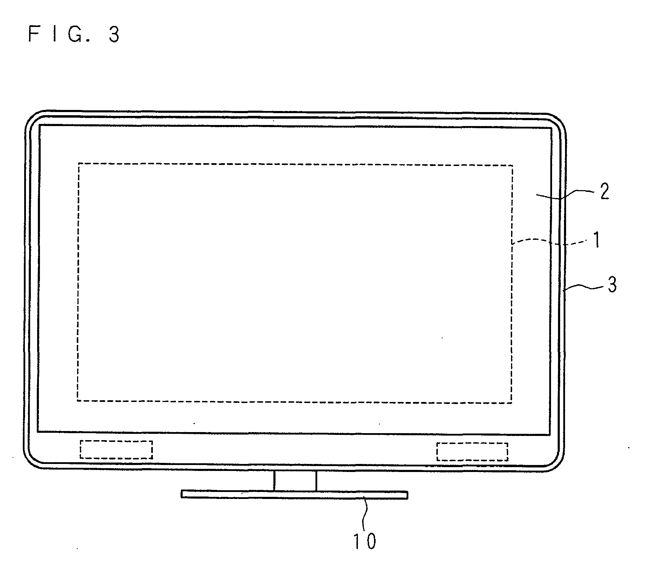

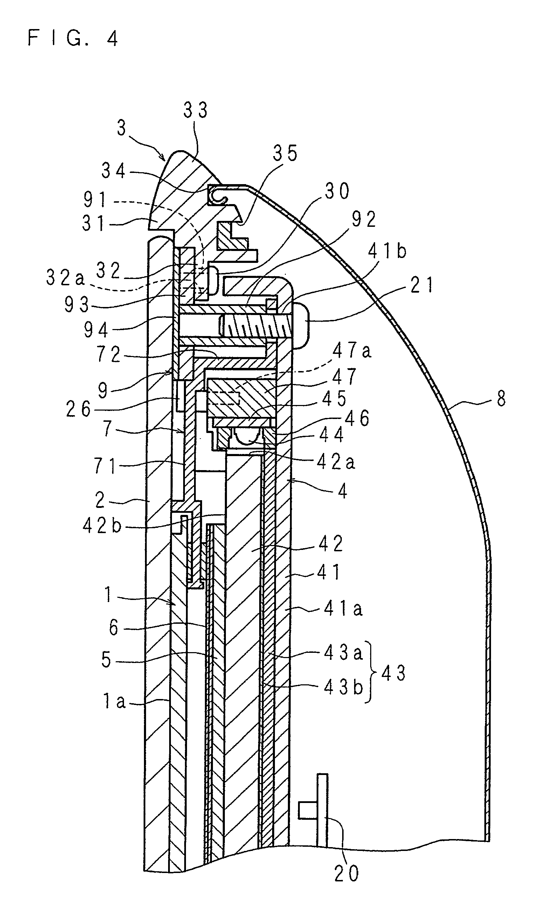

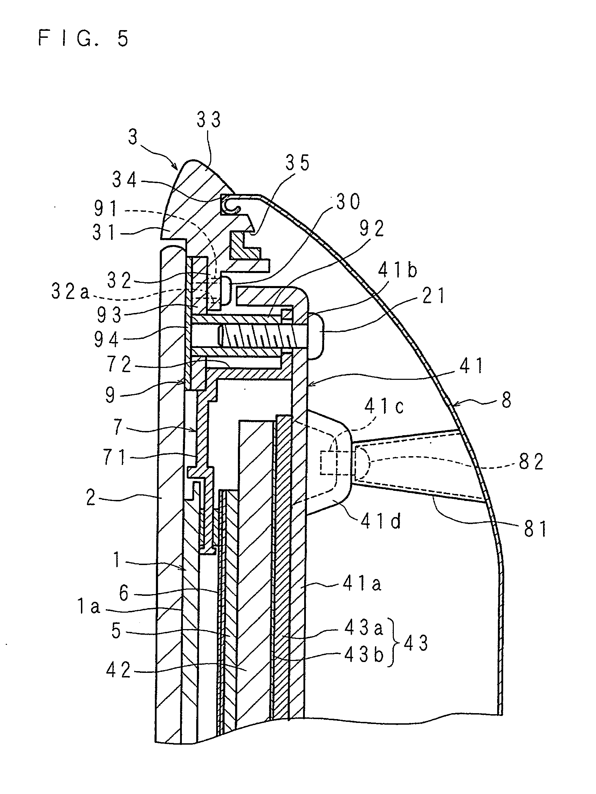

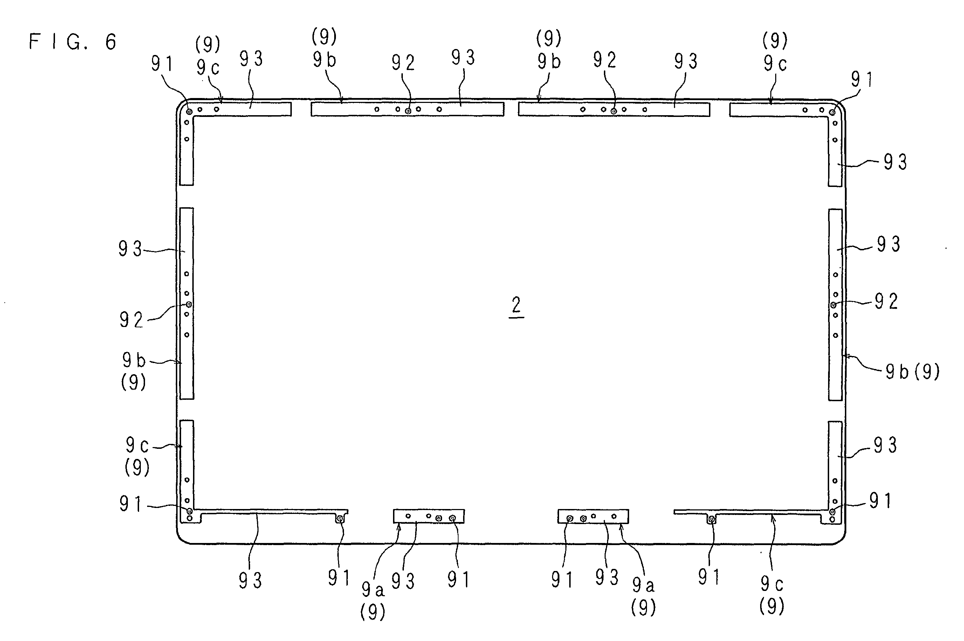

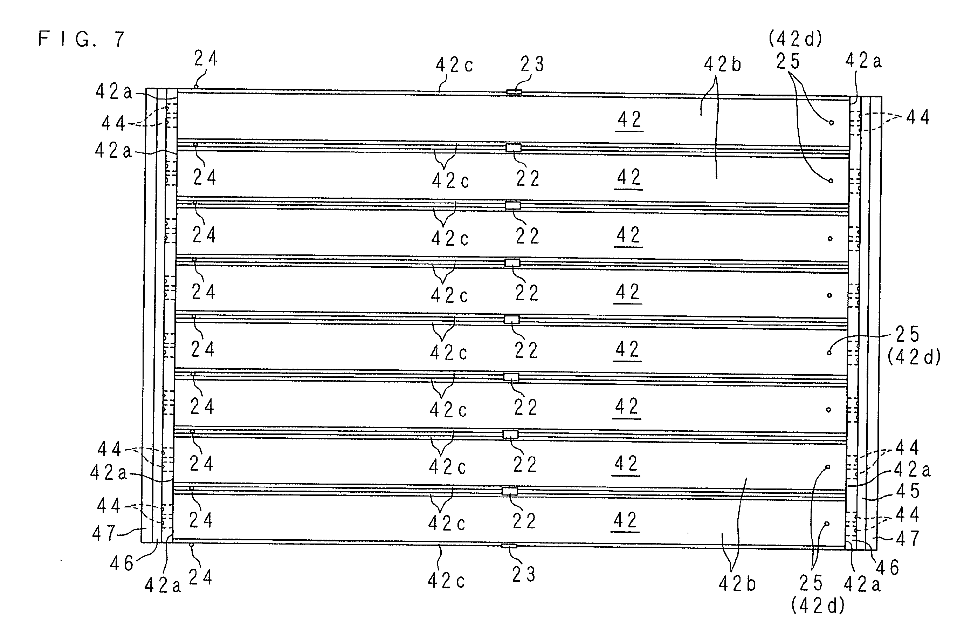

FIG. 3 is a front view illustrating a configuration of a display apparatus according to the present invention. FIG. 4 is a horizontally sectional plan view of the display apparatus, a part of which is omitted. FIG. 5 is a vertically sectional plan view of the display apparatus, a part of which is omitted. FIG. 6 is a rear view illustrating a configuration of the rear face side of a translucent panel. FIG. 7 is a front view illustrating a configuration of a light guide plate part.

The display apparatus includes: a display panel 1 provided with a display screen 1a that displays a television image and that is arranged on the front side; a translucent panel 2 fabricated from a glass plate and stacked and bonded onto the front face of the display panel 1; a ring body 3 for covering the circumference of the periphery of the translucent panel 2; a light source section 4 arranged behind the display panel 1; a diffusion plate 5 arranged between the light source section 4 and the display panel 1; an optical sheet 6 stacked on the diffusion plate 5; a frame 7 arranged between the optical sheet 6 and the display panel 1 and facing the rear face of the periphery of the display panel 1; and a cover 8 covering the rear side of the light source section 4. This display apparatus is a liquid crystal television constructed such that the television image displayed on the front side of the display panel 1 is visually seen from the front direction of the translucent panel 2. In other words, this display apparatus is a liquid crystal display apparatus. Here, the display panel 1 and the translucent panel 2 constitute the display section.

The display panel 1 has the shape of an approximately rectangular parallelepiped. Then, a polarizing plate is joined to the front face and the rear face thereof.

The translucent panel 2 is thicker than the display panel 1, and has the shape of an approximately rectangular parallelepiped larger than the display panel 1. Then, in the rear face of the periphery thereof, a plurality of linking bodies 9 each having a tube-shaped boss 91 or 92 are attached in a manner departing from each other in the circumferential direction.

As illustrated in FIG. 4, the linking body 9 includes: a plate part 93 having an approximately rectangular shape or an approximate L-shape and arranged in the four corner parts along the periphery of the translucent panel 2; and a longer first tube-shaped boss 91 or a shorter second tube-shaped boss 92 whose one end part is swaged to the plate part 93. Then, the plate part 93 is attached to the rear face of the periphery of the translucent panel 2 by attaching means such as a double-sided tape 94, so that the tube-shaped boss 91 or 92 protrudes rearward.

The linking body 9 includes: a first linking body 9a in which the first tube-shaped boss 91 is provided in a plate part having an approximately rectangular shape; a second linking body 9b in which the second tube-shaped boss 92 is provided in a plate part having an approximately rectangular shape; and a third linking body 9c in which the first tube-shaped boss 91 is provided in a plate part having an approximate L-shape. Then, the first linking body 9a is arranged on the center side in the length direction of the lower side part of the translucent panel 2. Further, the second linking body 9b is arranged on the center side of the upper side part and on the center side in the length direction on the two side-face parts of the translucent panel 2, and the third linking body 9c is arranged at the four corners of the translucent panel 2.

The ring body 3 is fabricated from synthetic resin and includes: a cover ring part 31 having an approximately rectangular shape and facing the peripheral surface of the translucent panel 2 in a manner departing in the radial direction; an extending protrusion 32 extending from the rear side of the cover ring part 31 toward the center side so as to face the rear face of the periphery of the translucent panel 2 and attached to the plate part 93 with a male screw 30; and an acute protruding part 33 protruding with an acute angle from the cover ring part 31 and the extending protrusion 32 toward the outside of the radial direction.

The extending protrusion 32 has an annular shape. Then, at each of a plurality of positions departing in the circumferential direction, a through hole 32a is provided into which the first tube-shaped boss 91 of the linking body 9 is inserted. Then, the extending protrusion 32 is attached to the linking body 9 with the male screw 30 screwed into the tube-shaped boss 91 in a state of being received by the plate part 93.

The acute protruding part 33 has a cross section of an approximate V-shape protruding in an acute manner from the front edge and the rear edge of the ring body 3 toward the center part in the thickness direction. Then, when the periphery of the ring body 3 is viewed, the apparent thickness of the ring body 3 is reduced. In the rear face of the pedestal side of the acute protruding part 33, an annular recess 34 depressed forward and a retention groove 35 are provided along the entire circumference. Then, a fitting opening of the cover 8 is fitted into the annular recess 34 from the rear side so that dust protection property is improved.

The light source section 4 includes: a support body 41 having a dish shape and attached to the rear side of the periphery of the translucent panel 2 so as to support the periphery of the translucent panel 2; light guide plates 42 having a strip shape each and arranged in parallel to each other up and down in plural lines inside the support body 41; a light reflecting plate 43 arranged behind the light guide plate 42; a plurality of light emitting diodes 44 (light emitting elements) serving as light sources arranged up and down on the two end sides of the light guide plate 42; the light emitting diode board 45 having a strip shape and provided with the light emitting diodes 44 which are to be arranged on the two end sides of the light guide plate 42 are mounted on one surface; a reflector 46 arranged between the light emitting diode board 45 and the light guide plate 42; and a heat radiator 47 facing the other surface of the light emitting diode board 45.

The support body 41 is fabricated by forming a metal plate into a dish shape having an approximately rectangular shape elongated in the horizontal direction, and has a plate part 41a formed in a slightly smaller size than the translucent panel 2. In the inside of the support body 41, the light reflecting plate 43 formed in a smaller size than the plate part 41a is placed and then the light guide plates 42 are arranged in parallel to each other in plural lines up and down relative to the light reflecting plate 43. On the rear face of the support body 41, a plurality of circuit boards 20 such as a power circuit board are attached. Further, a stand 10 is attached in the lower part of the rear face.

In the two side-parts in the horizontal direction in the support body 41, the light emitting diode board 45 and the heat radiator 47 are placed in a vertically long orientation. Then, the light emitting diodes 44 serving as light emitting elements mounted on the light emitting diode board 45 face the one end and the other end of the light guide plate 42, and the heat radiator 47 faces the frame part inner surface.

At a position facing the second tube-shaped boss 92 of the outer periphery part in the plate part 41a, an insertion hole 41b is provided. Then, the periphery of the insertion hole 41b faces the tip of the tube-shaped boss 92 through a part of the frame 7, and then linkage to the translucent panel 2 is achieved by a male screw 21 screwed into the tube-shaped boss 92 through the insertion hole 41b. Further, at a position deviated from the insertion hole 41b of the outer periphery part, a protrusion-shaped linking part 41d having a fitting hole 41c is fabricated by integral molding and then the cover 8 is linked to the protrusion-shaped linking part 41d in a removable manner.

The plate part 41a is provided with: a plurality of locking holes 41e used for attaching the light reflecting plate 43; and a stop hole 41f restricting the sliding of the light reflecting plate 43. The locking holes 41e is an elongated hole in a vertically long orientation between adjacent light guide plates 42.

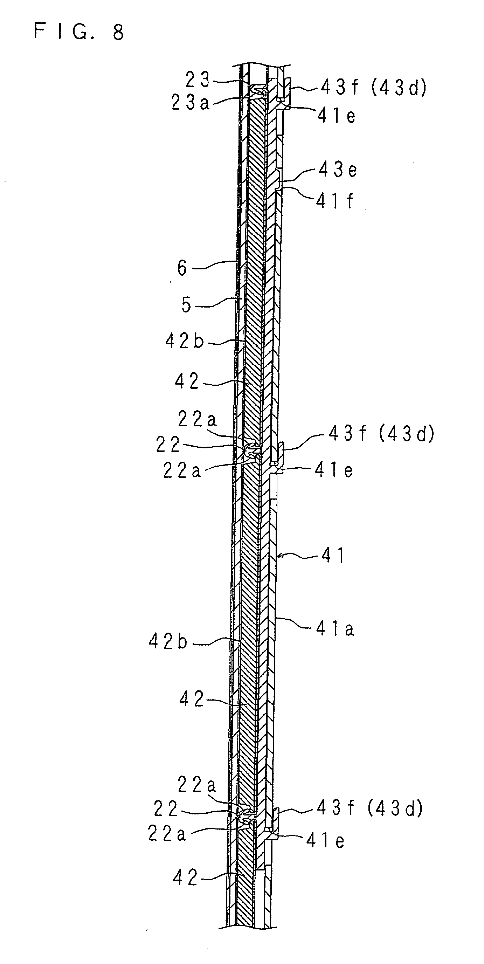

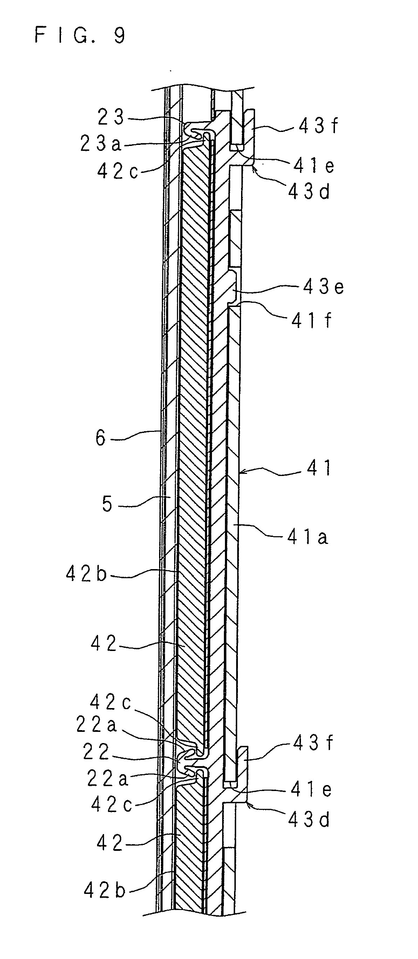

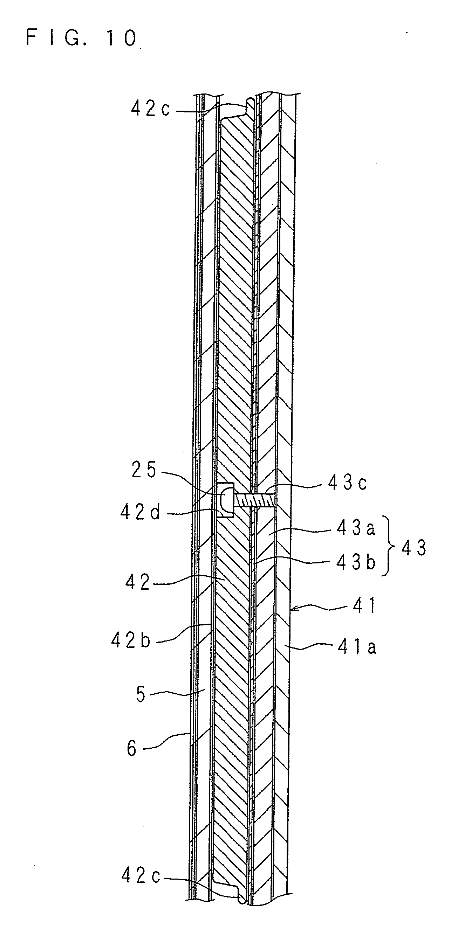

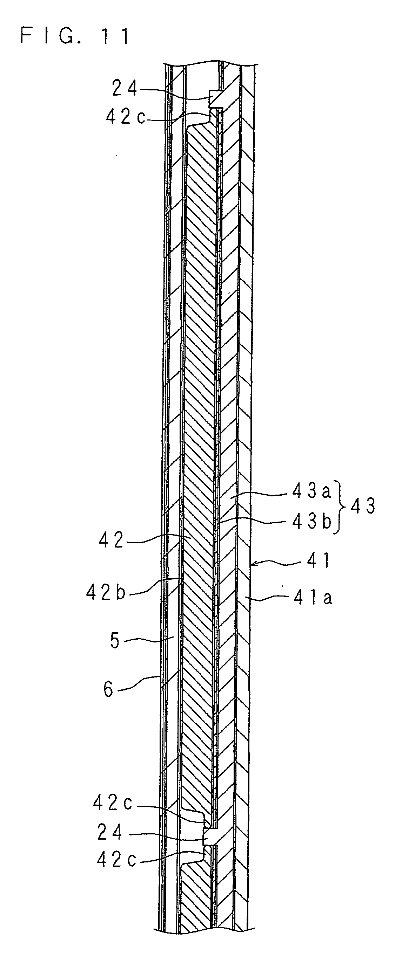

FIG. 8 is a vertically sectional side-view illustrating a configuration of a light guide plate holding part. FIG. 9 is an expanded vertically sectional side-view illustrating a configuration of a light guide plate holding part. FIG. 10 is an expanded vertically sectional side-view illustrating a configuration of a light guide plate fixing part. FIG. 11 is an expanded vertically sectional side-view illustrating a configuration of a light guide plate positioning part.

The light reflecting plate 43 includes: a thick plate member 43a that has the shape of a rectangle slightly smaller than the plate part and that is elongated in the horizontal direction and composed of synthetic resin; and a thin plate member 43b having high reflectivity and overlapping with the front face of the thick plate member 43a. Here, the light reflecting plate 43 constitutes the middle member.

The thick plate member 43a has high reflectivity. Then, at positions departing upward and downward in one end part in the horizontal direction, a plurality of attachment holes 43c used for attaching the one end part of the light guide plate 42 are provided. At positions departing upward and downward in the front in the center part in the horizontal direction, first and second holding bodies 22 and 23 holding the center part of the light guide plate 42 onto the support body 41 are fabricated by integral molding. At positions departing upward and downward in the front in the other end part in the horizontal direction, positioning protrusions 24 fixing the parallel-arrangement positions of the light guide plates 42 in a manner permitting expansion and contraction of the light guide plates 42 in the longitudinal direction caused by heat are fabricated by integral molding. Further, at positions departing upward and downward on the rear side in the center part in the horizontal direction, locking claws 43d inserted and locked into the locking holes 41e are fabricated by integral molding. Further, on the rear face of the thick plate member 43a, a stop part 43e having a protruding shape and fitted and locked into the stop hole 41f is fabricated by integral molding.

The thin plate member 43b is provided with: a plurality of fitting holes corresponding to the attachment holes 43c; a plurality of insertion holes into which the first and the second holding bodies 22 and 23 are inserted; and a plurality of insertion holes into which the positioning protrusions 24 are inserted.

Each first holding body 22 has an approximate T-shape provided with claw pieces 22a and 22a protruding upward and downward from the tip side of the base piece protruding forward from the front face of the thick plate member 43a. Then, the first holding bodies 22 are arranged at intervals equal to the intervals of parallel arrangement of the light guide plates 42. Further, each claw piece 22a engages with the side-face part on the shorter side of the light guide plate 42. Further, in the tip part of holding body 22, a part between the tip parts of the claw pieces 22a and 22a is warped convex relative to a light exiting surface 42b.

Each second holding body 23 has an approximate J-shape provided with a claw piece 23a protruding one of upward and downward from the tip side of the base piece protruding forward from the front face of the thick plate member 43a. Then, the second holding bodies 23 are arranged on the upper side and the lower side of the first holding body 22 at intervals equal to the intervals of parallel arrangement of the light guide plates 42. Further, each claw piece 23a engages with the side-face part on the longer side in the center part in the longitudinal direction of the light guide plate 42.

The positioning protrusions 24 protrude forward from the front face of the thick plate member 43a, and are arranged departing upward and downward in a manner permitting engagement with the side surface on the longer side on the other end side in the longitudinal direction of the light guide plate 42 so as to define the parallel-arrangement positions of the light guide plates 42.

The locking claw 43d has the shape of an approximately L-shape where the tip side of the base piece protruding rearward from the thick plate member 43a is bent toward one side. Then, the light reflecting plate 43 is slid in a direction along the plate part 41a in a state of being inserted into the locking holes 41e. Thus, the locking claws 43d move in the inside of the locking holes 41e and hence are locked in the periphery of the locking holes 41e.

In the light guide plate 42, light-entering side-surfaces 42a are arranged at the two ends on the shorter side, and the light exiting surface 42b is arranged in one surface in the thickness direction. The one surface on the longer side is provided with engagement recesses 42c and 42c depressed over the entire length. Then, the light guide plate 42 has a cross section of an approximate T-shape. Further, the light exiting surface 42b on the one surface faces the diffusion plate 5, and the other surface faces the light reflecting plate 43.

One end part in the longitudinal direction of the light guide plate 42 is provided with a through hole 42d with a stage corresponding to the attachment hole 43c. Then, the one end part in the longitudinal direction of the light guide plate 42 is attached to the light reflecting plate 43 with a male screw 25 fitted into the attachment hole 43c from the larger diameter hole part of the through hole 42d. The other end side in the longitudinal direction of the light guide plate 42 is fitted in between the positioning protrusions 24 and 24 departing upward and downward, so that the light guide plate 42 is held in a manner permitting relative displacement by the positioning protrusions 24 and 24.

The side-face part on the longer side in the center part in the longitudinal direction of the light guide plate 42 arranged on the center side in the direction of parallel arrangement engages with the claw pieces 22a and 22a of the first holding body 22. The side-face part on the longer side in the center part in the longitudinal direction of the light guide plate 42 arranged on the two sides in the direction of parallel arrangement engages with the claw piece 23a of the second holding body 23. Further, the light guide plate 42 is formed by cutting into a predetermined length a long-size light guide plate fabricated by extrusion molding of synthetic resin material such as acrylic resin and polycarbonate resin.

The light emitting diode board 45 is fabricated from an aluminum material having a strip shape so that its heat radiation property is improved. Then, the plurality of light emitting diodes 44 are mounted in one line in a manner of departing in the longitudinal direction. Then, the other surface is linked to the heat radiator 47 so that the heat having been transferred from the light emitting diode 44 to the light emitting diode board 45 is radiated from the heat radiator 47. Fitting holes 47a are provided at plural places of the heat radiator 47. Further, the heat radiator 47 is fixed to the support body 41 with a plurality of male screws.

The reflector 46 faces the light-entering side-surface of the light guide plate 42 and the light emitting diode board 45. Then, an incidence hole is provided at a position facing the light emitting diode 44. Then, the light emitting diode 44 is arranged in the incidence hole so that light emitted from the light emitting diode 44 passes through the incidence hole and then enters the light-entering side-surface of the light guide plate 42.

The diffusion plate 5 is for diffusing the light emitted from the light exiting surface 42b of the light guide plate 42, and is formed in an approximately rectangular shape corresponding to the display panel 1 and placed on the light exiting surface 42b of the light guide plate 42.

The optical sheet 6 is composed of a relatively thin resin sheet having light transmitting property and flexibility like a reflection polarization sheet polarizing the light diffused by the light guide plate 42 or alternatively a prism sheet and a diffusion sheet. Further, the optical sheet 6 is formed in an approximately rectangular shape in correspondence to the display panel 1.

The frame 7 is composed of synthetic resin and has: a rectangular annular plate part 71 facing the rear face of the periphery of the display panel 1; and a fitting tube section 72 protruding at a position facing the second tube-shaped boss 92 on the outer periphery side of the annular plate part 71. A dust protection belt in contact with the periphery of the display panel 1 is bonded with adhesives to the inner periphery side of the front face of the annular plate part 71. Further, a dust protection belt in contact with the periphery of the optical sheet 6 is bonded with adhesives to the inner periphery side of the rear face of the annular plate part 71. Further, the annular plate parts 71 on the two sides of the frame 7 are provided with insertion holes corresponding to the fitting holes 47a. Then, the frame 7 is linked to the heat radiator 47 by shafts 26 inserted into the fitting holes 47a through the insertion holes. Further, the fitting tube section 72 is provided with: a larger diameter hole into which the tube-shaped boss 92 is fitted; and a smaller diameter hole formed continuously to the larger diameter hole via a step. Then, the tip of the tube-shaped boss 92 abuts against the step so as to receive the frame 7.

The cover 8 has the shape of a deep dish of an approximately rectangular shape covering the rear side of the support body 41, and has a fitting opening that is opened forward. Then, the fitting opening is fitted into the annular recess 34. Further, the cover 8 is provided with a plurality of tube-shaped bosses 81 protruding and facing the protrusion-shaped linking part 41d, and then is linked to the support body 41 with male screws 82 screwed through tube-shaped bosses 81 into the fitting holes 41c of the protrusion-shaped linking part 41d.

The stand 10 is attached with a plurality of male screws to a stand attaching part provided in the lower rear face of the support body 41 and has: a support rod protruding below the lower edge of the translucent panel 2; and a base linked to the lower end of the support rod.

Assembling of the liquid crystal display apparatus having above-mentioned configuration is performed, for example, according to the following steps (1) to (9).
(1) The light emitting diode board 45 to which the heat radiator 47 is linked and the reflector 46 are placed on the two side-parts in the support body 41 placed horizontally on a work bench in a state that the front face is oriented upward. Then, the light reflecting plate 43 is placed between the light emitting diode boards 45 and 45 on the two sides in the support body 41. The light reflecting plate 43 is slid along the plate part 41a in a state that the locking claws 43d are inserted into the locking holes 41e, so that the locking claws 43d are locked around the locking holes 41e and the sliding is inhibited by the stop part 43e. Further, the heat radiator 47 is fixed to the plate part 41a with a male screw.
(2) The plurality of light guide plates 42 are placed in parallel to each other on the light reflecting plate 43. In the light guide plate 42 on the center side in the up and down directions, the center part in the longitudinal direction is arranged between two first holding bodies 22 and 22 so that the engagement recess 42c is held by the claw pieces 22a of the holding bodies 22 and 22 in a manner permitting relative displacement in the longitudinal direction. In the light guide plates 42 on the two sides in the up and down directions, the center part in the longitudinal direction is arranged between the first and the second holding bodies 22 and 23 so that the engagement recess 42c is held by the claw pieces 22a and 23a of the holding bodies 22 and 23. Further, the male screw 25 is screwed from the through hole 42d on one end side in the longitudinal direction of each light guide plate 42 into the attachment hole 43c, so that the one end part of the light guide plate 42 is fixed to the light reflecting plate 43. Further, the other end part in the longitudinal direction of each light guide plate 42 is arranged between two positioning protrusions 24 and 24 and held in a manner permitting relative displacement in the longitudinal direction.
(3) The diffusion plate 5 is placed on the light guide plate 42. Then, the optical sheet 6 is placed on the diffusion plate 5.
(4) The frame 7 is placed on the optical sheet 6. Then, the periphery of the frame 7 is attached to the heat radiator 47 by the shaft 26.
(5) The display panel 1 in which the translucent panel 2 is bonded on the display screen 1a and the translucent panel 2 are placed horizontally on a work bench in an orientation that the translucent panel 2 is positioned lower. Then, the ring body 3 is placed on the rear face of the periphery of the translucent panel 2, and then linked to the first linking body 9a with the male screw 30 screwed into the first tube-shaped boss 91.
(6) The orientation of the support body 41 is reversed such that the frame 7 is positioned lower. Then, the assembly is placed on the display panel 1 in this reversed orientation.
(7) The male screw 21 is screwed through the insertion hole 41b of the support body 41 into the tube-shaped boss 92 of the second linking body 9b, so that the translucent panel 2 is linked to the support body 41.
(8) A plurality of circuit boards 20 such as a power circuit board are attached with a male screw to the plate part 41a in the upward orientation on the support body 41. Further, the stand 10 is attached to the plate part 41a with a male screw.
(9) The cover 8 is fitted over from the upside of the support body 41. Then, a male screw 82 is screwed through the tube-shaped boss 81 into the fitting hole 41c of the protrusion-shaped linking part 41d, so that the cover 8 is attached.

As described above, the center part in the longitudinal direction of the light guide plates 42 arranged in parallel to each other is hold by the claw pieces 22a of two holding bodies 22 and 22 arranged on the longer side of the light guide plates 42 or by the claw pieces 22a and 23a of two holding bodies 22 and 23 arranged on the longer side of the light guide plates 42. This suppresses the influence of light inhomogeneity caused by the holding bodies 22 and 23, and hence avoids degradation in the light characteristics of the light guide plates 42. Further, one holding body 22 holds two light guide plates 42 and 42. This reduces the number of necessary holding bodies 22 for the light guide plates 42.

One end side in the longitudinal direction of the light guide plates 42 arranged in parallel to each other is fixed with the male screw 25, and the other end side is held by the positioning protrusions 24 and 24 in a manner permitting relative displacement in the longitudinal direction. Thus, even when the light guide plate 42 expands and contracts in the longitudinal direction owing to heat, the separation dimension between the light-entering side-surface 42a on one end side of the light guide plate 42 and the light emitting diode 44 is maintained. Further, expansion and contraction of the light guide plate 42 caused by heat are absorbed by the positioning protrusion 24, and hence warpage is avoided in the light guide plate 42. Further, the separation dimension between the light-entering side-surface on the other end side of the light guide plate 42 and the light emitting diode 44 may be set up in advance in accordance with the amount of expansion and contraction of the light guide plate 42 caused by heat. Thus, the separation dimension is homogenized.

### Embodiment 2

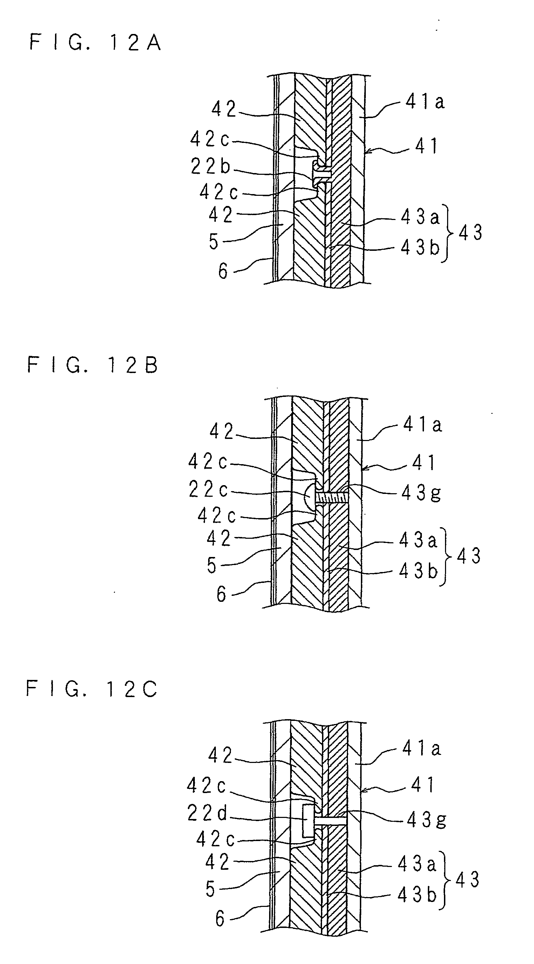

FIGS. 12A to 12C are expanded vertically sectional side-views illustrating other configurations of the first holding body 22 part. In the configuration illustrated in FIG. 12A, the first holding body 22 formed integrally with the thick plate member 43a is implemented by a tube-shaped protrusion 22b protruding forward from the thick plate member 43a. Then, the tip part of the tube-shaped protrusion 22b is deformed so as to hold the side-face part on the longer side in the center part in the longitudinal direction of adjacent light guide plates 42 arranged up and down.

In the configuration illustrated in FIG. 12B, the first holding body 22 is constructed from a male screw 22c. Then, when the male screw 22c is screwed into a fitting hole 43g provided in the thick plate member 43a, the side-face part on the longer side in the center part in the longitudinal direction of adjacent light guide plates 42 arranged up and down is held.

In the configuration illustrated in FIG. 12C, the first holding body 22 is constructed from a flanged pin 22d. Then, when the flanged pin 22d is fitted into a fitting hole 43g provided in the thick plate member 43a, the side-face part on the longer side in the center part in the longitudinal direction of adjacent light guide plates 42 arranged up and down is held.
The other points in the configuration and in the operation are similar to those in Embodiment 1. Thus, like components are designated by like reference numerals, and hence their detailed description and description of operation and effects are omitted.

### Embodiment 3

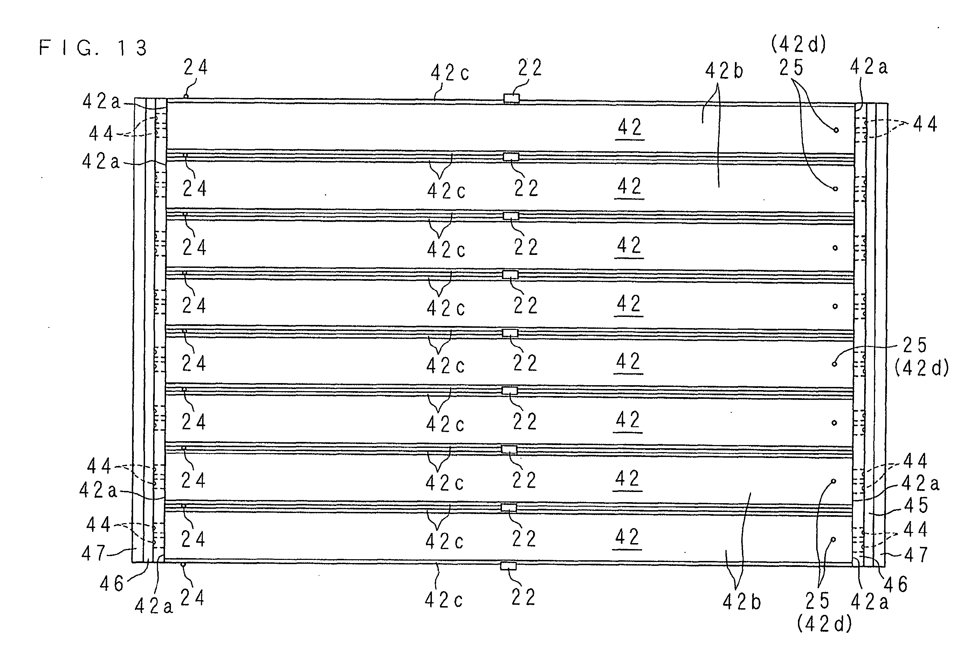

FIG. 13 is a front view illustrating another configuration of the light guide plate 42 part. In the configuration according to the present embodiment, the second holding body 23 is omitted and the first holding bodies 22 are arranged in a manner of departing upward and downward so that the center part in the longitudinal direction of adjacent light guide plates 42 arranged up and down is held by the claw piece 22a of the first holding body 22.
The other points in the configuration and in the operation are similar to those in Embodiment 1. Thus, like components are designated by like reference numerals, and hence their detailed description and description of operation and effects are omitted.

### Embodiment 4

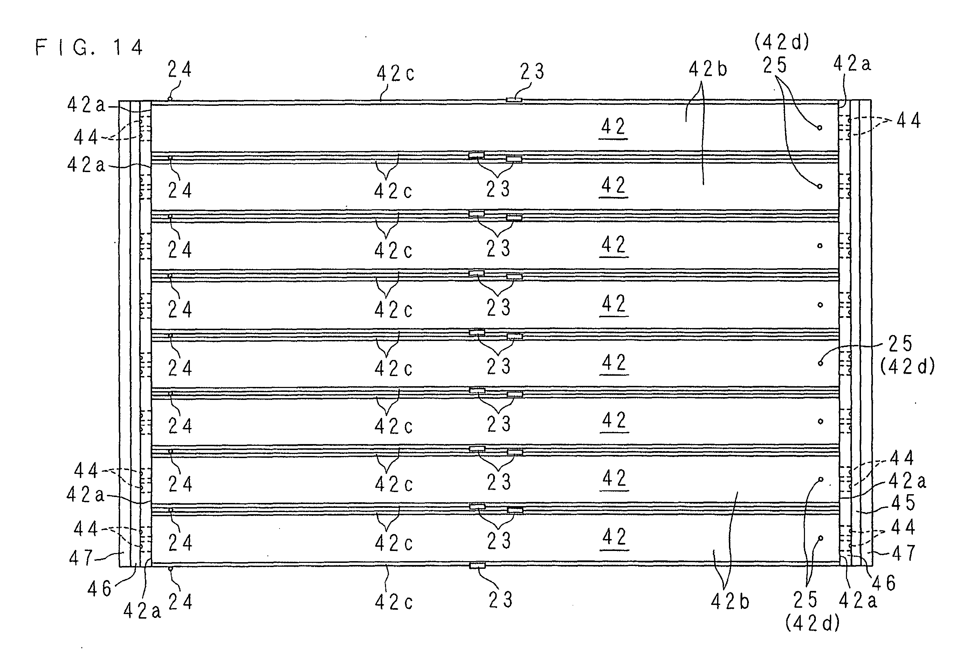

FIG. 14 is a front view illustrating another configuration of the light guide plate 42 part. In the present embodiment, the first holding body 22 is omitted and the second holding bodies 23 are arranged at two positions departing in the horizontal direction in a manner of departing upward and downward in correspondence to the interval of parallel arrangement of the light guide plates 42. In one of the two holding bodies 23 and 23 departing in the horizontal direction, the claw piece 23a is formed upward. In the other one, the claw piece 23a is formed downward. Then, the two second holding bodies 23 and 23 in an orientation of crossing with each other in the up and down directions hold the center part in the longitudinal direction of the light guide plate 42.
The other points in the configuration and in the operation are similar to those in Embodiment 1. Thus, like components are designated by like reference numerals, and hence their detailed description and description of operation and effects are omitted.

### Embodiment 5

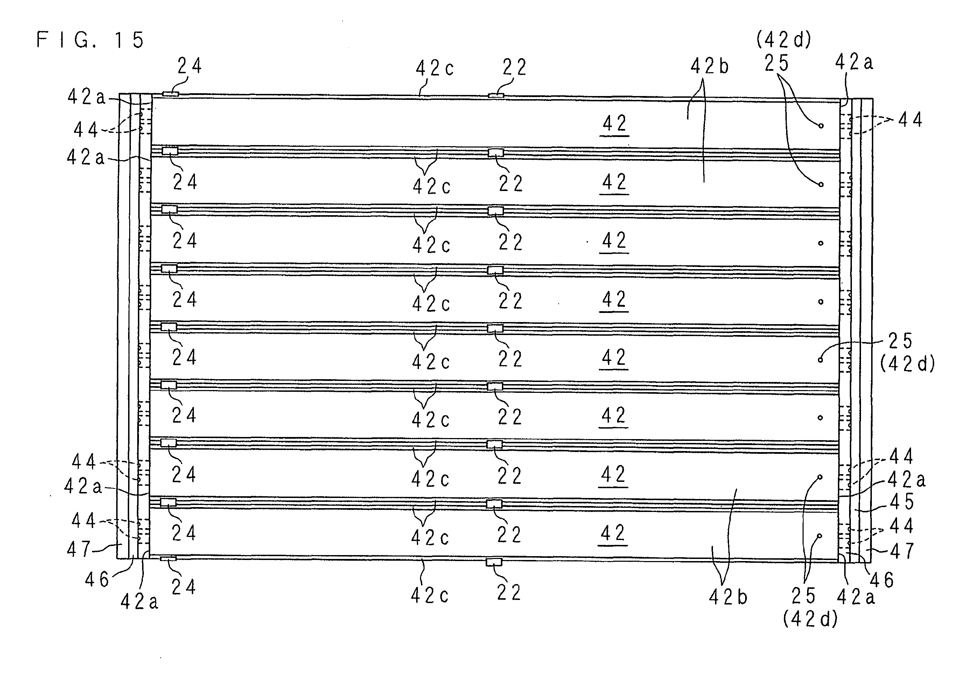

FIG. 15 is a front view illustrating another configuration of the light guide plate 42 part. In the configuration according to the present embodiment, the positioning protrusion 24 has a configuration similar to that in the first and the second holding bodies 22 and 23. The positioning protrusion 24 on the center side in the up and down directions has an approximate T-shape provided with claw pieces protruding upward and downward from the tip side of the base piece protruding forward from the front face of the thick plate member 43a. Then, the positioning protrusions 24 on the center side are arranged at intervals equal to the intervals of parallel arrangement of the light guide plates 42. Further, each claw piece engages with the side-face part on the longer side of the light guide plate 42. The positioning protrusion 24 on the end side in the up and down directions has an approximate J-shape provided with a claw piece protruding one of upward and downward from the tip side of the base piece protruding forward from the front face of the thick plate member 43a. Then, the positioning protrusions 24 on the end side are arranged on the upper side and the lower side of the positioning protrusion 24 on the center side in the up and down directions at intervals equal to the intervals of parallel arrangement of the light guide plates 42. Further, each claw piece engages with the side-face part on the longer side of the light guide plate 42.
The other points in the configuration and in the operation are similar to those in Embodiment 1. Thus, like components are designated by like reference numerals, and hence their detailed description and description of operation and effects are omitted.

### Embodiment 6

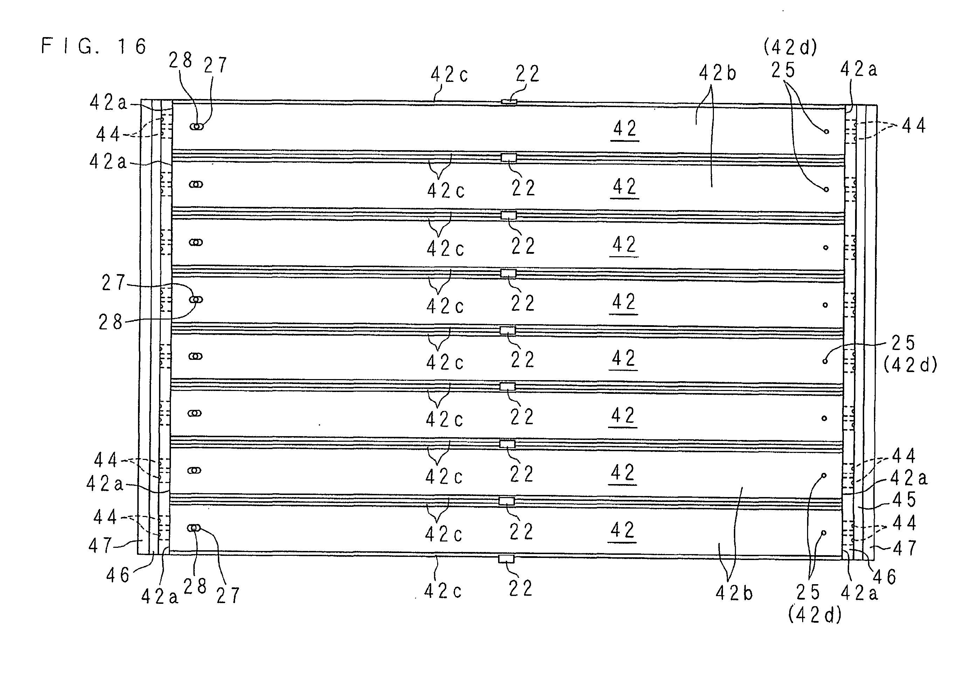

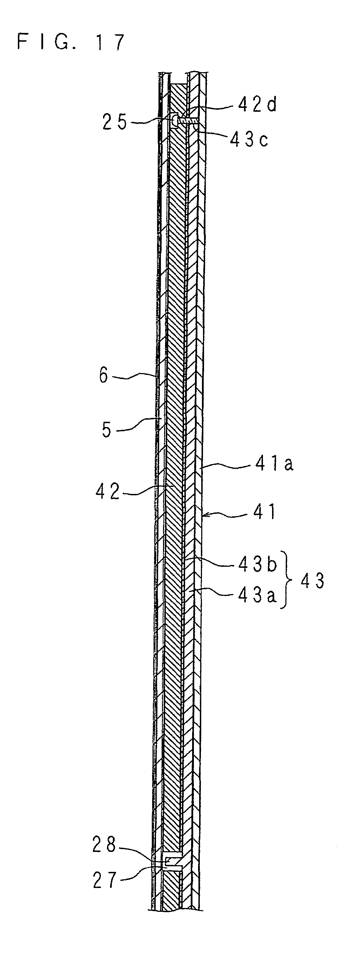

FIG. 16 is a front view illustrating another configuration of the light guide plate 42 part. FIG. 17 is a vertically sectional plan view illustrating another configuration of a light guide plate 42 part. In the present embodiment, in place of the two positioning protrusions 24, the other end part in the longitudinal direction of the light guide plate 42 is provided with an elongated hole 27 formed through in the thickness direction and elongated in the longitudinal direction of the light guide plate 42 and the light reflecting plate 43 is provided with a protrusion 28 fitted into the elongated hole 27 in a manner permitting relative displacement in the longitudinal direction.

The protrusion 28 has a diameter slightly smaller than the width dimension of the elongated hole 27, and defines the vertical position of the light guide plate 42. Further, expansion and contraction in the longitudinal direction of the light guide plate 42 caused by heat are absorbed by the elongated hole 27.
The other points in the configuration and in the operation are similar to those in Embodiment 1. Thus, like components are designated by like reference numerals, and hence their detailed description and description of operation and effects are omitted.

### Embodiment 7

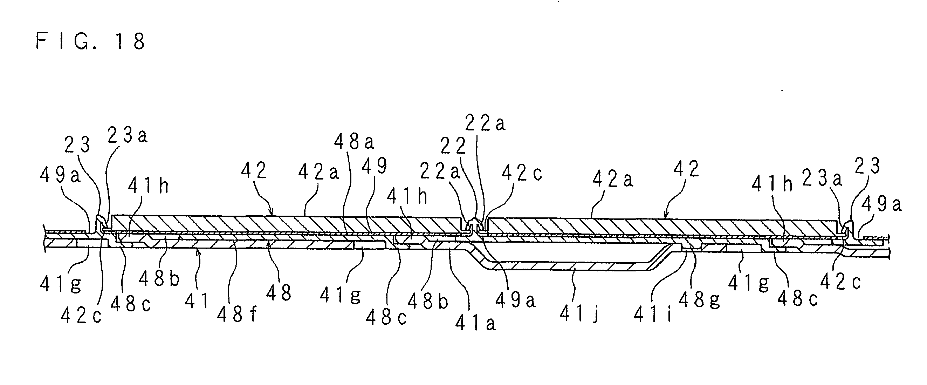

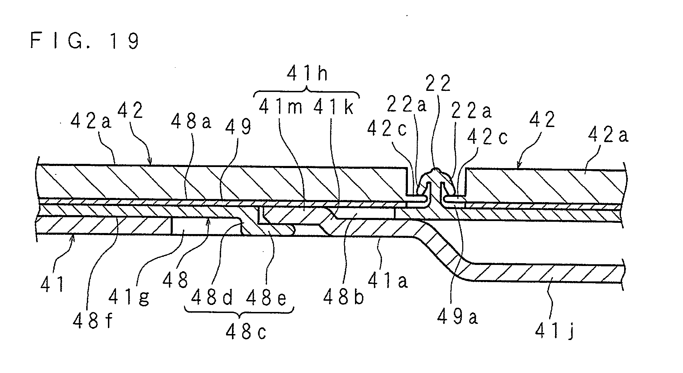

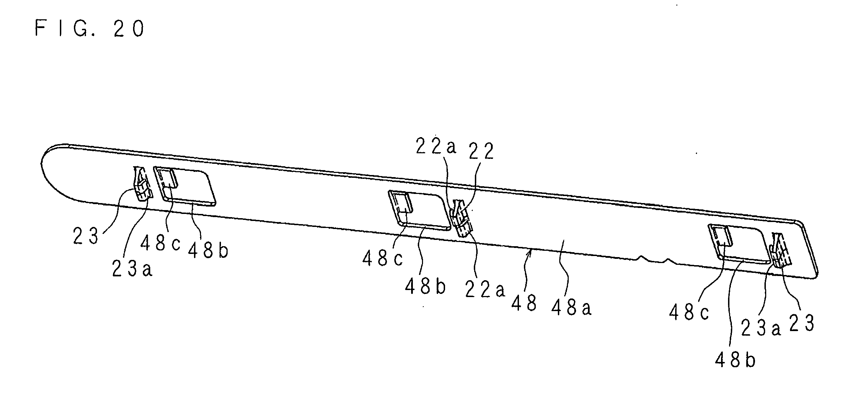

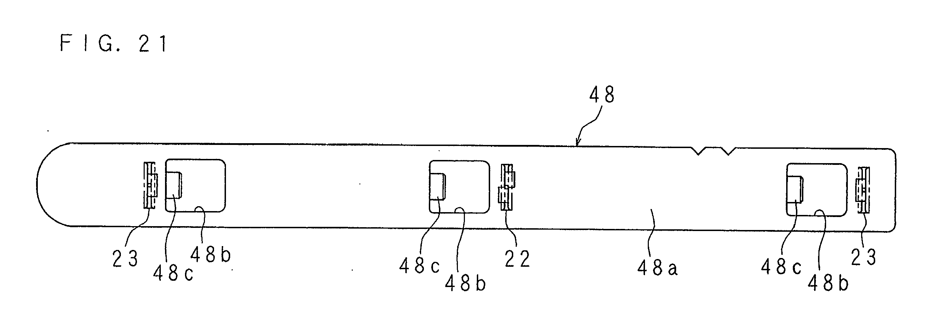

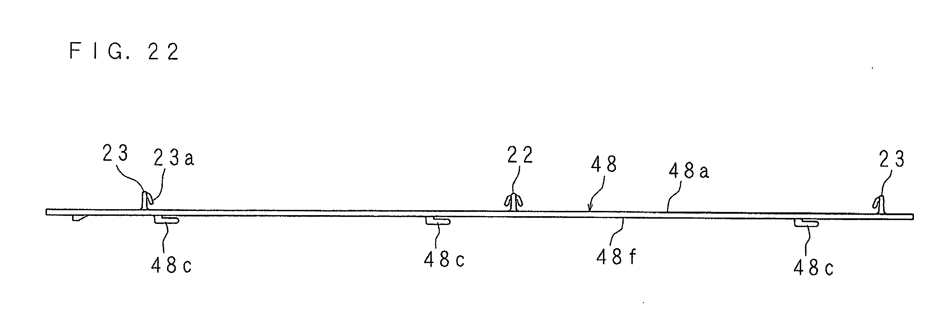

FIG. 18 is a vertically sectional side-view illustrating another configuration of a light guide plate apparatus. FIG. 19 is an expanded sectional view illustrating a configuration of the main part of the light guide plate apparatus. FIG. 20 is a perspective view illustrating a configuration of a middle plate. FIG. 21 is a front view illustrating a configuration of the middle plate. FIG. 22 is a side view illustrating a configuration of the middle plate. In the present embodiment, in place of the thick plate member 43a of the light reflecting plate 43, a plurality of middle plates 48 are provided that have a strip shape and are composed of synthetic resin fabricated by integral molding with the holding bodies 22 and 23. Further, the middle plate 48 is attached to the plate part 41a in an orientation that its longitudinal direction aligns with the direction of parallel arrangement of the light guide plates 42. Further, a light reflecting plate 49 composed of a thin plate member 43b is inserted between the middle plate 48 and the light guide plate 42.

At positions facing each middle plate 48 of the plate part 41a, a plurality of first holes 41g are provided in a manner of departing in the longitudinal direction of the middle plate 48 (in the direction of parallel arrangement of the light guide plates 42). Further, provided are: a first protruding piece 41h protruding toward the middle plate 48 side such as to hang over the first hole 41g from the edge of the first hole 41g; and a stop hole 41i restricting the sliding of the middle plate 48. Further, on the center side of the plate part 41a, a plurality of seating parts 41j protruding backward are formed. Then, when a male screw is screwed into the hole provided in the seating part 41j, the circuit board 20 is attached.

The first hole 41g has an approximately quadrangle shape. Then, the first protruding piece 41h extends from the edge on one side toward the edge on the other side.

The first protruding piece 41h has: a base 41k displacing from the edge of the first hole 41g toward the middle plate 48 side; and a tip part 41m having a plate shape extending from the tip of the base 41k in parallel to the front face of the plate part 41a. Then, the first protruding piece 41h is arranged such that the front face in the thickness direction of the tip part 41m aligns approximately with one surface 48a on the light guide plate 42 side of the middle plate 48. In other words, the first protruding piece 41h is formed such that the level difference between the tip part 41m of the first protruding piece 41h and the one surface 48a on the light guide plate 42 side of the middle plate 48 becomes small.

In the middle plate 48, a first holding body 22 protrudes in the center part in the longitudinal direction and second holding bodies 23 and 23 protrude at the two ends in the longitudinal direction. Further, a stop part 48g having a protruding shape and fitted into the stop hole 41i is provided on one end side in the longitudinal direction. Claw parts 22a and 22a in the first holding body 22 depart in the longitudinal direction of the light guide plate 42.

A second hole 48b into which the first protruding piece 41h is inserted is provided at a position located in the center part in the longitudinal direction of the middle plate 48 and departing slightly in the longitudinal direction relative to the first holding body 22 and at a position located at the two ends in the longitudinal direction of the middle plate 48 and departing slightly in the longitudinal direction relative to the second holding body 23. A second protruding piece 48c is provided that protrudes rearward of the plate part 41a in a manner of hanging over the second hole 48b from the edge of each second hole 48b in the middle plate 48 and that faces the first protruding piece 41h in the thickness direction of the middle plate 48.

The second hole 48b has an approximately quadrangle shape. Then, a second protruding piece 48c extends from the edge on one side toward the edge on the other side.

The second protruding piece 48c has: a base 48d displacing from the edge of the second hole 48b toward the plate part 41a side; and a tip part 48e having a plate shape extending from the tip of the base 48d in parallel to the other surface 48f of the plate part 41a side of the middle plate 48. Then, the second protruding piece 48c is arranged such that the rear face in the thickness direction of the tip part 48e aligns approximately with the rear face of the plate part 41a. In other words, the second protruding piece 48c is formed such that the level difference between the tip part 48e of the second protruding piece 48c and the rear face of the plate part 41a becomes small.

The light reflecting plate 49 has high reflectivity and is composed of one thin resin sheet having an area corresponding to the plate part 41a. Further, insertion holes 49a are provided that correspond to the holding bodies 22 and 23 protruding on each middle plate 48.

In the light guide plate apparatus having the above-mentioned configuration, at a plurality of positions departing in the longitudinal direction of the light guide plate 42 in the front face of the plate part 41a in the support body 41, the plurality of middle plates 48 are placed such that their longer sides align with the direction of parallel arrangement of the light guide plates 42. Then, the second protruding piece 48c of each middle plate 48 is inserted into the first hole 41g of the plate part 41a, and the first protruding piece 41h is inserted into the second hole 48b. Then, in this state, the middle plate 48 slides along the plate part 41a. Thus, the tip part 48e of the second protruding piece 48c faces and becomes in contact with the rear face of the tip part 41m of the first protruding piece 41h so that the sliding is inhibited and the middle plate 48 is attached to the plate part 41a. Then, when the light reflecting plate 49 is placed on each middle plate 48, the first and the second holding bodies 22 and 23 escape from the insertion holes 49a of the light reflecting plate 49. Then, in a state, the plurality of light guide plates 42 are placed on the light reflecting plate 49. At that time, the plurality of middle plates 48 are arranged at a plurality of positions departing in the longitudinal direction of the light guide plate 42 in a manner that their longer sides align with the direction of parallel arrangement of the light guide plates 42. Thus, the plurality of lock recesses 42c departing in the longitudinal direction of each light guide plate 42 are held by the claw pieces 22a and 23a of the holding bodies 22 and 23.

In the present embodiment, the middle plate 48 having a strip shape has the holding bodies 22 and 23. Then, among the first protruding piece 41h and the second protruding piece 48c used for attaching the middle plate 48 to the plate part 41a of the support body 41, the first protruding piece 41h is arranged such that the tip part 41m having a plate shape aligns approximately with one surface 48a on the light guide plate 42 side of the middle plate 48. Thus, when the one sheet of light reflecting plate 49 is placed on each middle plate 48 in order to improve the reflectivity for the light emitted from the light guide plate 42, warpage is avoided in the thickness direction of the light reflecting plate 49. This avoids disturbance in the direction of light reflection and hence improves the light characteristics of the light guide plate 42.

Among the first protruding piece 41h and the second protruding piece 48c, the second protruding piece 48c is arranged such that the rear face in the thickness direction of the tip part 41m having a plate shape aligns approximately with the rear face of the plate part 41a. Thus, the level difference becomes small between the rear face of the plate part 41a and a surface opposite to the first protruding piece 41h in the second protruding piece 48c. Thus, an increase in the thickness is avoided that could be caused by attaching the middle plate 48 to the plate part 41a of the support body 41, and hence overall thickness reduction is achieved.

As such, an increase in thickness is avoided in the part where the middle plate 48 is attached to the support body 41. Thus, when electronic components on the high-voltage side (also called the commercial source voltage side or the primary side) such as a transformer, an electrolytic capacitor, and a coil in the circuit board 20 attached to the seating part 41j of the support body 41 are arranged at a position opposite to the part where the middle plate 48 is attached to the support body 41, the electronic components are allowed to be arranged closer to the plate part 41a in a state that an enhanced insulation distance is ensured that is set forth in the safety standard IEC60065 (a safety standard by the Electrotechnical International Commission). Further, the thickness is reduced between the light exiting surface 42b of the light guide plate 42 and the rear face of the circuit board 20, and hence overall thickness reduction is achieved.
The other points in the configuration and in the operation are similar to those in Embodiment 1. Thus, like components are designated by like reference numerals, and hence their detailed description and description of operation and effects are omitted.

Here, in the embodiments 1 to 7 described above, a part of the configuration in each embodiment may be combined with another one. Further, the configuration of each embodiment is not restrictive.

Further, in the configuration according to the embodiments described above, the light source section 4 arranged behind the display panel 1 has been provided with the light guide plates 42 and the light emitting diodes 44 (light emitting elements) serving as light sources arranged on the edge side of the light guide plates 42. Instead, the light sources may be composed of lamps such as cold cathode tubes.

Further, in the configuration according to the embodiments described above, the light emitting diodes 44 have been arranged on the two end sides in the longitudinal direction of the light guide plates 42. Instead, the light emitting diodes 44 may be arranged on one end side in the longitudinal direction of the light guide plates 42.

Further, in the configuration according to the embodiments described above, the light reflecting plate 43 has been arranged between the light guide plate 42 and the support body 41 and the light reflecting plate 43 has been provided with the holding bodies 22 and 23 and the positioning protrusion 24. Instead, the light reflecting plate 43 may be omitted and the support body 41 may be provided with the holding bodies 22 and 23 and the positioning protrusion 24. In this case, the holding bodies 22 and 23 may be in a manner permitting detaching and attaching relative to the support body 41 fabricated from a metal plate. Alternatively, in case of a support body made of synthetic resin, the holding body may be provided integrally with the support body. Further, also in a configuration employing the light reflecting plate 43, the holding bodies 22 and 23 may be in a manner permitting detaching and attaching.
Further, in a case that the light reflecting plate 43 is omitted, the other surface of the light guide plate 42 or alternatively the plate part 41a of the support body 41 is provided with a light reflection layer.

Further, in the configuration according to the embodiments described above, the light reflecting plate 43 has been provided with the thick plate member 43a and the thin plate member 43b. Instead, any one of these may be provided alone.

Further, in the configuration according to the embodiments described above, one end part in the longitudinal direction of the light guide plate 42 has been fixed with the male screw 25. Instead, this fixing may be performed with a flanged pin fitted into a through hole. Alternatively, the light guide plates 42 may be pressed and fixed by rod members elongated in a direction along the shorter side of the light guide plate 42. That is, the method of fixing is not limited to particular ones.

### [Description of Reference Numerals]

- 1: display panel (display section)
- 1a: display screen
- 4: light source section (light source apparatus)
- 41: support body
- 41e: locking hole
- 41g: first hole
- 41h: first protruding piece
- 49: light reflecting plate
- 42: light guide plate
- 42c: engagement recess
- 43: light reflecting plate
- 43d: locking claw
- 44: light emitting diode (light source)
- 48: middle plate
- 48b: second hole
- 48c: second protruding piece
- 22, 23: holding body
- 22a, 23a: claw piece
- 24: positioning protrusion (positioning part, protrusion)
- 27: elongated hole (positioning part)
- 28: protrusion (positioning part)

## Claims

1. A light guide plate apparatus including a plurality of light guide plates having an approximately rectangular shape and emitting from one surface light having entered through a side surface on one shorter side, the plurality of light guide plates being arranged in parallel to each other such that side surfaces on a longer side are facing a support body supporting the light guide plates, wherein the apparatus includes a holding body arranged between adjacent ones of the light guide plates and engaging with a side-face part at least on one longer side of the adjacent light guide plates so as to hold the light guide plates.

2. The light guide plate apparatus according to claim 1, wherein the longer side of the one surface in the light guide plate has an engagement recess depressed from the side surface on the longer side and extending over the entire length, and the holding body engages with the engagement recess.

3. The light guide plate apparatus according to claim 1 or 2, wherein the holding body has light reflectivity.

4. The light guide plate apparatus according to any one of claims 1 to 3, wherein the holding body has one end fixed to the support body or a middle member arranged between the support body and the light guide plate, and includes a base piece arranged between the adjacent light guide plates and two claw pieces extending from the other end part of the base piece toward the adjacent light guide plate side.

5. The light guide plate apparatus according to claim 4, wherein the two claw pieces are warped convex over a range from a tip part of one claw piece to a tip part of the other claw piece.

6. The light guide plate apparatus according to claim 4, wherein the two claw pieces are parallel to the one surface over a range from a tip part of one claw piece to a tip part of the other claw piece.

7. The light guide plate apparatus according to any one of claims 1 to 3, wherein the support body has a plate shape, a middle plate is provided whose one surface faces the support body and whose the other surface faces the light guide plate, and the plurality of holding bodies are provided in the other surface of the middle plate.

8. The light guide plate apparatus according to claim 7, wherein the support body is provided with a first hole formed through and is provided with a first protruding piece protruding toward the middle plate side such as to hang over the first hole from the edge of the first hole, and wherein the middle plate is provided with a second hole which is formed through and into which the first protruding piece is inserted and the middle plate is provided with a second protruding piece protruding toward the support body side such as to hang over the second hole from the edge of the second hole and facing in contact with the first protruding piece in the thickness direction of the middle plate.

9. The light guide plate apparatus according to claim 8, wherein the first protruding piece is arranged such that a surface opposite to a facing contact surface facing in contact with the second protruding piece is located at a position of approximately aligning with the other surface of the middle plate.

10. The light guide plate apparatus according to claim 8 or 9, wherein the second protruding piece is arranged such that a surface opposite to a facing contact surface facing in contact with the first protruding piece is located at a position of approximately aligning with a surface opposite to the middle plate of the support body.

11. The light guide plate apparatus according to any one of claims 7 to 10, including a light reflecting plate arranged between the middle plate and the light guide plate and having an insertion hole into which the holding body is inserted.

12. The light guide plate apparatus according to any one of claims 1 to 11, wherein one of the two shorter sides of the light guide plate is fixed to the support body and wherein a positioning part is provided that defines the position of the light guide plate in a manner that the other one of the two shorter sides of the light guide plate is allowed to expand or contract in the length direction of the longer side.

13. The light guide plate apparatus according to claim 12, wherein the positioning part has two protrusions arranged such as to be allowed to engage with the two side surfaces on the longer side of the light guide plate.

14. The light guide plate apparatus according to claim 12, wherein the positioning part has: an elongated hole formed through the light guide plate in the thickness direction and elongated in the length direction of the longer side; and a protrusion fitted into the elongated hole in a manner permitting relative displacement.

15. The light guide plate apparatus according to any one of claims 1 to 6 and 12 to 14, including a light reflecting plate arranged between the light guide plate and the support body, wherein the holding body is formed integrally with the light reflecting plate.

16. The light guide plate apparatus according to claim 15, wherein a locking claw is integrally provided in a surface of the light reflecting plate facing the support body and wherein a locking hole into which the locking claw is inserted and locked is provided in the support body.

17. The light guide plate apparatus according to claim 16, wherein the locking hole is an elongated hole allowing the locking claw to move in a direction along the light reflecting plate and wherein a stop part is provided that stops the light reflecting plate at a position to which the locking claw has moved.

18. A light source apparatus comprising: light sources; and a light guide plate apparatus according to any one of claims 1 to 17, wherein the light guide plates are arranged such that light emitted from each light source enters through the side surface on the shorter side.

19. A display apparatus comprising: a display section having a display screen on one side; and a light source apparatus according to claim 18, which is arranged on the other side of the display section such that one surface of the light guide plate faces the one side.

20. A television receiver apparatus comprising: a receiving section receiving a television broadcasting signal; and a display apparatus according to claim 19, wherein the receiving section receives a television broadcasting signal and a television image is displayed on the display screen.
